# EUROPEAN PATENT APPLICATION

(11) **EP 2 110 752 A1**
(43) Date of publication of application: **21.10.2009**
(21) Application number: 08711001.1
(22) Date of filing: 08.02.2008
(51) Int. Cl.: G06F 13/00, G06F 21/20, H04M 3/42, H04Q 7/38

(54) **CONTENT DISTRIBUTION MANAGEMENT DEVICE, COMMUNICATION TERMINAL, PROGRAM, AND CONTENT DISTRIBUTION SYSTEM**

(30) Priority: 08.02.2007 JP 2007029737
(71) Applicant: NTT DoCoMo, Inc., Chiyoda-ku Tokyo 100-6150 (JP)
(72) Inventor: ONDA, Yasushi, Chiyoda-ku Tokyo 100-6150 (JP); KANO, Izua, Chiyoda-ku Tokyo 100-6150 (JP); KAMIYA, Dai, Chiyoda-ku Tokyo 100-6150 (JP); KUSHIDA, Yusuke, Chiyoda-ku Tokyo 100-6150 (JP); MURAKAMI, Keiichi, Chiyoda-ku Tokyo 100-6150 (JP); YAMADA, Eiju, Chiyoda-ku Tokyo 100-6150 (JP); YAMADA, Kazuhiro, Chiyoda-ku Tokyo 100-6150 (JP)
(74) Representative: HOFFMANN EITLE
(86) International application number: PCT/JP2008/052122
(87) International publication number: WO 2008/096849

(57) **Abstract**

[Problem] To provide a mechanism for supporting prevention of unintentional access to contents provided by malicious content providers.

[Solution] Gateway server device 50, if hyperlinked URLs in HTML data included in an HTTP response transferred from Internet communication network 40 to mobile packet communication network 20 via the device 50, are stored in a database, includes parameters indicating the URLs in a header of the HTTP response, and thereafter transfers the HTTP response to mobile packet communication network 20.

## Description

### Technical Field

The present invention relates to a technique for controlling distribution of content for communication terminals.

### Background Art

Many cell-phones are mounted with a browser capable of interpreting content written in a markup language such as CHTML (Compact Hyper Text Markup Language); as a result, a communication environment has been created in which users of cell-phones are able to obtain a variety of information from the Internet and browse it, as they do using a personal computer. With improvements to this communication environment, business entities referred to as "content provider", which store a variety of contents for cell-phones in a server device located on the Internet and distribute the contents, have emerged. Among business entities of this kind, there are quite a lot of malicious entities that provide contents imposing an unintended and unreasonable charge on a user of a cell-phone or forcing a user of a cell-phone to unintentionally transmit information. JP-A-2004-178512 discloses a mechanism for supporting prevention of unintentional access to contents provided by such malicious content providers. A content browsing device disclosed therein is configured to, if content is obtained and displayed using a URL (Uniform Resource Locator), and a pointer is moved to an element liked to a URL in the content by a hyperlink, show pop-up information on the overview and attributes of hyperlinked content. If the mechanism is mounted on an existing cell-phone, a user is able to know in advance whether hyperlinked content is content provided by a malicious content provider. A similar technique is disclosed in JP-A-2005-32041, JP-A-2004-46478, and JP-A-2000-276471.

### Disclosure of the Invention

### Problems to be Solved by the Invention

An increased number of such malicious content providers is a problem that cannot be left unsolved for a carrier (communication firm) providing a communication infrastructure for cell-phones.
However, techniques disclosed in the first to fourth publications described above require a cell-phone to install an application to obtain information on hyperlinked content in advance, or require a server device operated by a content provider to prepare data on summaries of their contents. Namely, the mechanisms cannot be realized by only modifying system settings of server devices constituting a communication infrastructure for cell-phones.
The present invention has been devised against the above-described background, and is intended to provide a mechanism for supporting prevention of unintentional access to content provided by malicious content providers.

### Means of Solving the Problems

A content distribution management device according to a preferred aspect of the present invention comprises: a storage means storing one or more addresses; a receiving means for receiving content data including hyperlinked text or hyperlinked image; a determining means for determining whether an address to which the text or the image included in the received content data is hyperlinked, is an address stored in the storage means; and a sending means for, if the determining means determines that the address to which the text or the image included in the content data is hyperlinked, is an address stored in the storage means, sending a parameter determining a method in which content is displayed in a communication terminal which is a destination of the content data, and the content data to the communication terminal.
In the foregoing description, "determining" means uniquely specifying a display method whereby content data provided from an address stored in the storage means can be visually distinguished from other content data.

In the above aspect, the content distribution management device may further comprise: a means for receiving a request including an address in an Internet communication network from a communication network; and a means for transferring the received request to the Internet communication network.

A content distribution management device according to another preferred aspect of the present invention comprises: a storage means storing one or more addresses; a receiving means for receiving from a communication terminal that has received content data, an address to which text or an image included in the content data is hyperlinked; a determining means for determining whether the received address is an address stored in the storage means; and a sending means for, if the determining means determines that the address is an address stored in the storage means, sending a parameter determining a method in which content is displayed in the communication terminal which is a destination of the content data, to the communication terminal.

In the above aspects, the content data may be display control data describing an element representing the text or the image to be displayed on a display device of the communication terminal, and a layout of the element, in a predetermined markup language.

Also, the parameter may be a parameter indicating an element representing text or image; and if a pointer operated using an operation overlaps the text or the image, after the text or the image is displayed on the display device of the communication terminal, a predetermined pictogram appears.

The parameter may be a parameter indicating an element representing text or image; and if the text or the image is highlighted by an operation using an operation, after the text or the image is displayed on the display device of the communication terminal, a predetermined pictogram appears.

The element representing the text or the image may be an element hyperlinked to a certified address.

A communication terminal according to another preferred aspect of the present invention comprises: a display means for displaying information; an operation means: a receiving means for receiving content data and a parameter indicating an element, the content data being display control data describing an element of hyperlinked text or a hyperlinked image and a layout of the element in a predetermined markup language; a first display control means for causing the display means to display the text or the image represented by the element of the received content data, in accordance with the layout; and a second display control means for, if text or an image represented by the element indicated by the received parameter, among the text or the image displayed on the display means, overlaps a pointer operated using the operation means, causing a predetermined pictogram to appear.

A communication terminal according to another preferred aspect of the present invention comprises: a display means for displaying information; an operation means: a receiving means for receiving content data and a parameter indicating an element, the content data being display control data describing an element of hyperlinked text or a hyperlinked image and a layout of the element in a predetermined markup language; a first display control means for causing the display means to display the text or the image represented by the element of the received content data, in accordance with the layout; and a second display control means for, if text or an image represented by the element indicated by the received parameter, among the text or the image displayed on the display means, is highlighted by an operation using the operation means, causing a predetermined pictogram to appear.

A program according to another preferred aspect of the present invention causes a computer device comprising: a display means for displaying information; an operation means; and a communication means for communicating information, to execute: a step of receiving content data and a parameter indicating an element via the communication means, the content data being display control data describing an element of hyperlinked text or a hyperlinked image and a layout of the element in a predetermined markup language; a step of causing the display means to display the text or the image represented by the element of the received content data, in accordance with the layout; and a step of, if text or an image represented by the element indicated by the received parameter, among the text or the image displayed on the display means, overlaps a pointer operated using the operation means, causing a predetermined pictogram to appear.

A program according to another preferred aspect of the present invention causes a computer device comprising: a display means for displaying information; an operation means; and a communication means for communicating information, to execute: a step of receiving content data and a parameter indicating an element via the communication means, the content data being display control data describing an element of hyperlinked text or a hyperlinked image and a layout of the element in a predetermined markup language; a step of causing the display means to display the text or the image represented by the element of the received content data, in accordance with the layout; and a step of, if text or an image represented by the element indicated by the received parameter, among the text or the image displayed on the display means, is highlighted by an operation using the operation means, causing a predetermined pictogram to appear.

A content distribution system according to another preferred aspect of the present invention comprises: a content distribution management device comprising: a storage means storing one or more addresses; a receiving means for receiving content data including hyperlinked text or hyperlinked image; a determining means for determining whether an address to which the text or the image included in the received content data is hyperlinked, is an address stored in the storage means; and a sending means for, if the determining means determines that the address to which the text or the image included in the content data is hyperlinked, is an address stored in the storage means, sending a parameter determining a method in which content is displayed in a communication terminal which is a destination of the content data, and the content data to the communication terminal; and a communication terminal comprising: a receiving means for receiving the parameter and the content data from the content distribution management device; and a content display control means for displaying the received content data, and controlling how the content data is displayed, on the basis of the received parameter.

### Brief Description of the Drawings

Fig. 1 is an overall configuration diagram of a content distribution system.
Fig. 2 is a physical configuration diagram of mobile terminal 10.
Fig. 3 is a logical configuration diagram of mobile terminal 10.
Fig. 4 is a hardware configuration schematic diagram of retrieval server device 30.
Fig. 5 is a hardware configuration schematic diagram of content providing server device 60.
Fig. 6 is a hardware configuration schematic diagram of gateway server device 50.
Fig. 7 is a flowchart showing an operation of a first embodiment.
Fig. 8 is a schematic diagram showing a memory space.
Fig. 9 is a diagram showing search result screen data being displayed.
Fig. 10 is a diagram showing pictogram 92 being displayed.
Fig. 11 is a flowchart showing an operation of a second embodiment.

### Description of Signs

10 --- Mobile Terminal, 11, 31, 51, 61 --- Control Unit, 12Transmitting/receiving Unit, 13 --- Instruction Input Unit, 14 --- Liquid Crystal Display Unit, 20 --- Mobile Packet Communication Network, 30Retrieval Server Device, 32, 52, 62 --- Communication Interface, 33, 53, 63 --- Hard Disk, 40 --- Internet Communication Network, 50 --- Gateway Server Device, 60 --- Content Providing Server Device.

### Best Mode for Carrying out the Invention

### (First Embodiment)

A first embodiment of the present invention will be described.
First, major terms used in the present embodiment will be defined. A "carrier" means a communication firm operating a mobile packet communication network. A "user" means a person who has purchased a mobile terminal and has a service contract of a mobile packet communication network with a carrier. A "content provider" means a business entity providing a variety of contents to users from its server device located on the Internet communication network. Among content providers, there are certified content providers whose contents have been certified by a carrier not to cause unreasonable damage to users, and which provide services, and non-certified content providers who provide services without receiving such a certification. In the present embodiment, a content provider that retrieves plural contents matching a search condition specified by a user, and provides a search result showing a list of pieces of text hyperlinked to the contents, will be referred to as "retrieval provider".

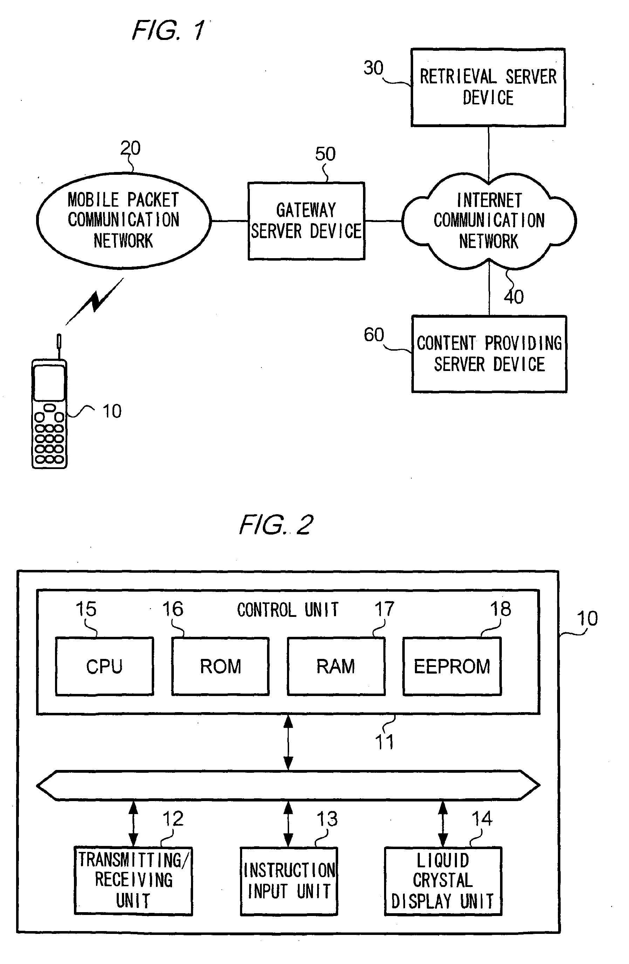

Fig. 1 is an overall configuration diagram of a content distribution system according to the present embodiment. As shown in the drawing, the system consists of mobile packet communication network 20 to which mobile terminal 10 is connected, Internet communication network 40 to which retrieval server device 30 and content providing server device 60 are connected, and gateway server device 50 located between the communication networks.

Mobile packet communication network 20 is a collection of nodes that transfers data in accordance with procedures conforming to a simplified version of the TCP (transmission control protocol) / IP (internet protocol) and to a protocol corresponding to the HTTP (hyper text transfer protocol) which is implemented on the TCP/IP, which includes base stations and packet subscriber processing devices. Internet communication network 40 is a collection of nodes that transfer data in accordance with protocols conforming to TCP/IP, and HTTP and SMTP (simple mail transfer protocol) which are implemented on TCP/IP, which includes server devices and routers.

Gateway server device 50 is a computer operating in a mobile packet gateway switching center under control of a carrier. The mobile packet gateway switching center interconnects mobile packet communication network 20 and Internet communication network 40. Data sent from a node in one communication network to a node in the other communication network is subject to protocol conversion by gateway server device 50, and transferred to the node in the other communication network. Gateway server device 50, when transferring converted data, also performs an operation characteristic of the present embodiment. Details of the operation will be described later.

Fig. 2 is a diagram showing a physical configuration of mobile terminal 10. Mobile terminal 10 is provided with control unit 11, transmitting/receiving unit 12, instruction input unit 13, and liquid crystal display unit 14.
Transmitting/receiving unit 12 carries out wireless communication with a base station of mobile packet communication network 20 under control of control unit 11.
Instruction input unit 13 includes a variety of buttons such as PBs (Push Buttons) and cursor keys, and, in response to an input operation by a user, provides an operation signal corresponding to the input operation to control unit 11.
Liquid crystal display unit 14 includes a display device such as a liquid crystal panel, which displays a variety of information under control of control unit 11.
Control unit 11 includes CPU 15, ROM 16, RAM 17, and EEPROM 18.
CPU 15 executes a variety of programs stored in ROM 16 or EEPROM 18, using RAM 17 as a work area.

ROM 16 stores preinstalled programs. The preinstalled programs are programs stored in ROM 16 in the process of manufacturing mobile terminal 10, which are specifically a multitasking operating system (hereinafter referred to as "multitasking OS"), a Java (Registered Trademark) platform program, and native applications. The programs are outlined as follows. The multitasking OS is an operating system supporting a variety of functions such as allocation of virtual memory spaces, which are necessary to realize a pseudo-parallel execution of plural tasks using a TSS (Time-Sharing System). The Java platform program is a bundle of programs that are described in accordance with the CDC (Connected Device Configuration) to provide a Java execution environment (described later). Native applications are programs for providing basic services of mobile terminal 10 such as voice communication, browsing, and exchange of mails, which includes a mailer application for receiving a mail exchange service and a browser application for receiving a browsing service.

EEPROM 18 has Java application program storage areas in which Java applications are stored. Java applications include: a Jar (Java Archive) file including an entity program describing a procedure executed under a Java execution environment, and image files and audio files used when the entity program is run; and an ADF (Application Descriptor File) in which information on installation and execution of the entity program and information on a variety of attributes of the entity program are described. A Java application is created by a content provider or a carrier and stored in a server on Internet communication network 40, and in response to a request from mobile terminal 10, is downloaded to the terminal from the server.

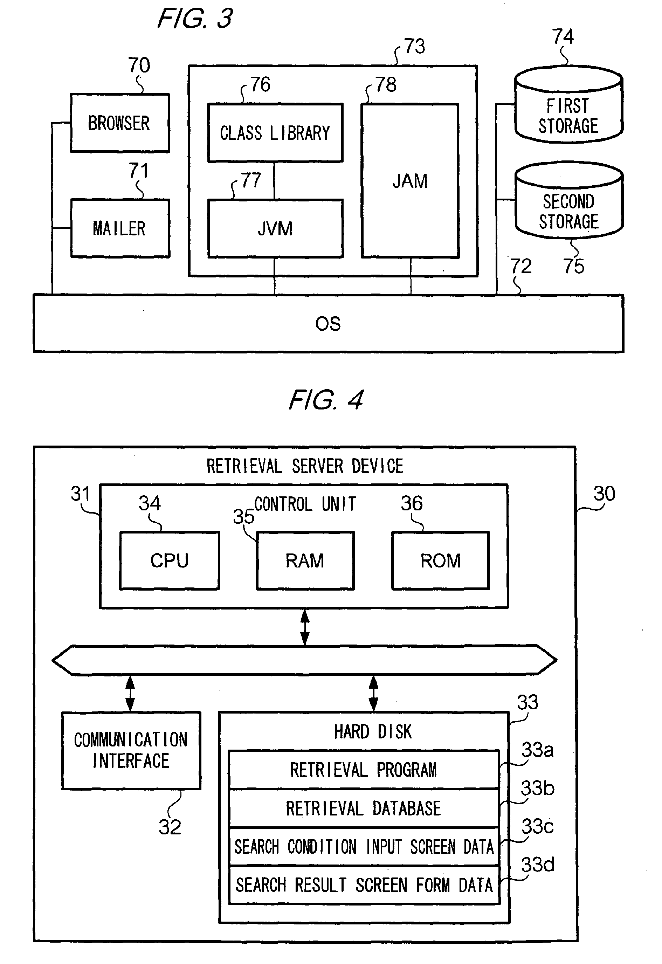

Fig. 3 is a diagram showing a logical configuration of units provided in control unit 11 of mobile terminal 10 through execution of a variety of programs stored in ROM 16 and EEPROM 18. As shown in the drawing, in mobile terminal 10 executing a variety of programs, browser 70, mailer 71, and Java execution environment 73 are provided on OS 72. In EEPROM 18, first storage 74 and second storage 75 are secured. Browser 70 and mailer 71 are provided by native applications stored in ROM 16, which are responsible for receipt and interpretation of data formatted with HTML (Hyper Text Markup Language), and exchange of emails.

Java execution environment 73 is provided by a Java platform program stored in ROM 16. Java execution environment 73 consists of class library 76, JVM (Java Virtual Machine) 77, and JAM (Java Application Manager) 78. Class library 76 is a file including program modules referred to as "class", that provide a function with high versatility. JVM 77 is optimized for the CDC, which is a configuration for a mobile device with multitasking OS 72. JVM 77 provides a function of interpreting and executing bytecode provided as a Java application. JAM 78 leads download and install of Java applications.

First storage 74 is a storage for storing Java applications (Jar file and ADF) downloaded under control of JAM 78. Second storage 75 is a storage for storing data generated during execution of a Java application, after the execution is terminated. A storage area of second storage 75 is assigned to each of installed Java applications. Data of a storage area assigned to a Java application can be rewritten during execution of the program, and cannot be rewritten by another Java application.

Fig. 4 is a hardware configuration schematic diagram of retrieval server device 30. The server device 30 is operated by a retrieval provider, which is provided with control unit 31, communication interface 32, and hard disk 33, as shown in the drawing.
Control unit 31 includes CPU 34, RAM 35, and ROM 36.
Communication interface 32 exchanges data in accordance with protocols such as TCP/IP and HTTP.
Hard disk 33 stores retrieval program 33a, retrieval database 33b, search condition input screen data 33c, and search result screen form data 33d.
Retrieval program 33a provides control unit 31 with a function of a robotic search engine that randomly cruises through a variety of content data distributed on Internet communication network 40, at predetermined intervals. Specifically, if content data matching pre-set search conditions is found, information on a URL indicative of a storage location of the content data and keyword information are collected from the content data. Keyword information is information indicating a keyword of content represented by content data.

Retrieval database 33b is a collection of plural records each of which corresponds to a URL of content data collected by control unit 31 executing retrieval program 33a. In retrieval database 33b, each time a new URL of content data is collected by control unit 31, a new record is added. In a field of the added record, the new URL is stored. Each record constituting retrieval database 33b has two fields of "address" and "keyword". In the field of "address", a URL of collected content data is stored. In the field of "keyword", keyword information on keywords included in content data is stored.

Search condition input screen data 33c and search result screen form data 33d are display control data describing elements (consisting of a start tag, content, and an end tag) of text or images to be displayed on liquid crystal display unit 14 of mobile terminal 10, and layout of the elements. Specifically, search condition input screen data 33c describes an input window for receiving entry of search conditions and a button for ordering start of a search, in HTML format. Search result screen form data 33d describes a frame form in which text of summaries of contents obtained as a result of a search is embedded, and a predetermined message, in HTML format.

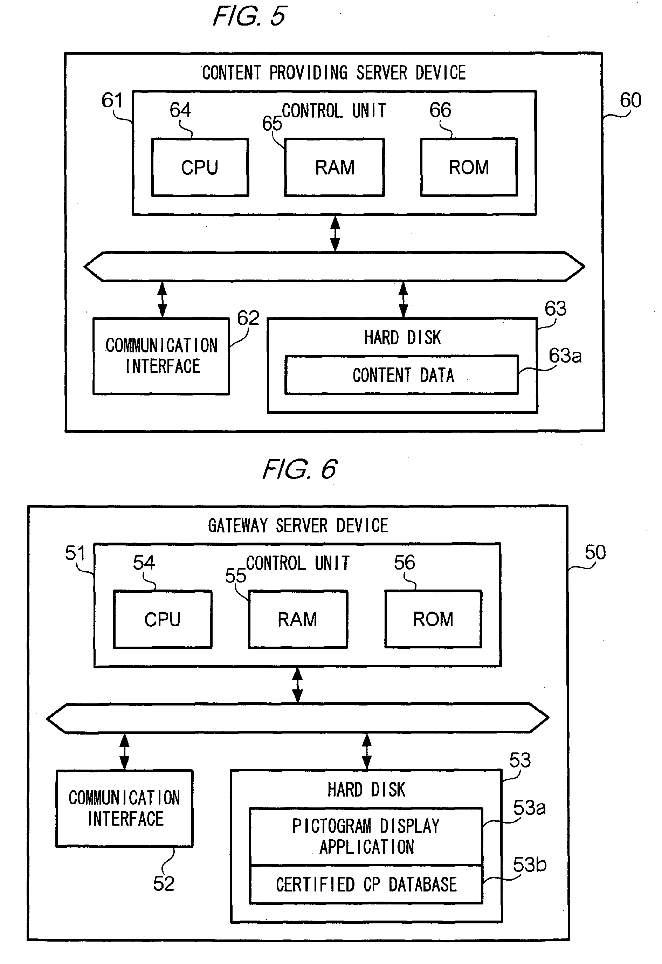

Fig. 5 is a hardware configuration schematic diagram of content providing server device 60. The server device 60 is operated by a content provider, which is provided with control unit 61, communication interface 62, and hard disk 63, as shown in the drawing. Control unit 61 includes CPU 64, RAM 65, and ROM 66, as does the aforementioned retrieval server device 30. A configuration of communication interface 62 is similar to that of the aforementioned retrieval server device 30.
Hard disk 63 stores content data 63a. Content data 63a is Java applications (Jar files and ADFs) created by a content provider who is an operator of content providing server device 60, or HTML data describing elements of text or images to be displayed on liquid crystal display unit 14 of mobile terminal 10, and layout of the elements, in HTML format.

Fig. 6 is a hardware configuration schematic diagram of gateway server device 50. Server device 50 operates under control of a carrier, which is provided with control unit 51, communication interface 52, and hard disk 53, as shown in the drawing.
Control unit 51 includes CPU 54, RAM 55, and ROM 56, as does the aforementioned retrieval server device 30. A configuration of communication interface 52 is similar to that of the aforementioned retrieval server device 30.

Hard disk 53 stores pictogram display application 53a and certified CP database 53b.
Pictogram display application 53a is a unique Java application (a Jar file and an ADF) created by a carrier for downloading by mobile terminal 10.
Pictogram display application 53a provides control unit 11 of mobile terminal 10 with the following two functions.
a. Parameter Extraction Function
This is a function of extracting a parameter indicating an address from a header of an HTTP response received by browser 70 of mobile terminal 10.
b. Pictogram Display Function
This is a function of, if a display position at which text or an image hyperlinked to an address indicated by a parameter is displayed by browser 70 and a position to which a pointer has been moved overlap each other, causing a pictogram showing that a linked site is secure to appear near the pointer.

Certified CP database 53b is a collection of plural records each of which corresponds to content data provided by a certified content provider. A record constituting the database has two fields of "address" and "parameter". In the field of "address", a URL indicating a storage location of HTML data provided by a certified content provider is stored. In the field of "parameter", a parameter indicating a URL as binary data having a data format that can be interpreted by pictogram display application 53a is stored.
In the database 53b, each time a content provider, which provides HTML data as content data, is certified by a carrier after going through a certification examination, a new record is added. In the added record, a pair of a URL and a parameter is stored. The flow of the certification procedure is outlined below.

A content provider submits prepared HTML data to a carrier together with a certification application form. In the certification application form, a URL of content providing server device 60 of the content provider in which the HTML data is to be stored, and other necessary information are described. On receiving the HTML data and the certification application form, the carrier examines whether content of the submitted HTML data meets certification requirements. Specifically, the carrier verifies whether content of the HTML data is offensive to public morals, and whether in linked sites of hyperlinks described using an anchor tag in the HTML data, a Java application that fraudulently obtains a resource of mobile terminal 10 such as personal information is stored. If the carrier obtains a verification result indicating that the HTML data is certifiable enough, the carrier adds a new record to certified CP database 53b of gateway server device 50, stores the URL of the HTML data described in the certification application form in "address" of the new record, and stores a parameter obtained by rewriting the URL to binary data that can be interpreted by pictogram display application 53a, in the field of "parameter". Subsequently, the carrier notifies the content provider that the content has been certified. On receiving the notification, the content provider stores the HTML data in a storage area of its content providing server device described as a URL in the certification application form, and starts a service of distributing the content.

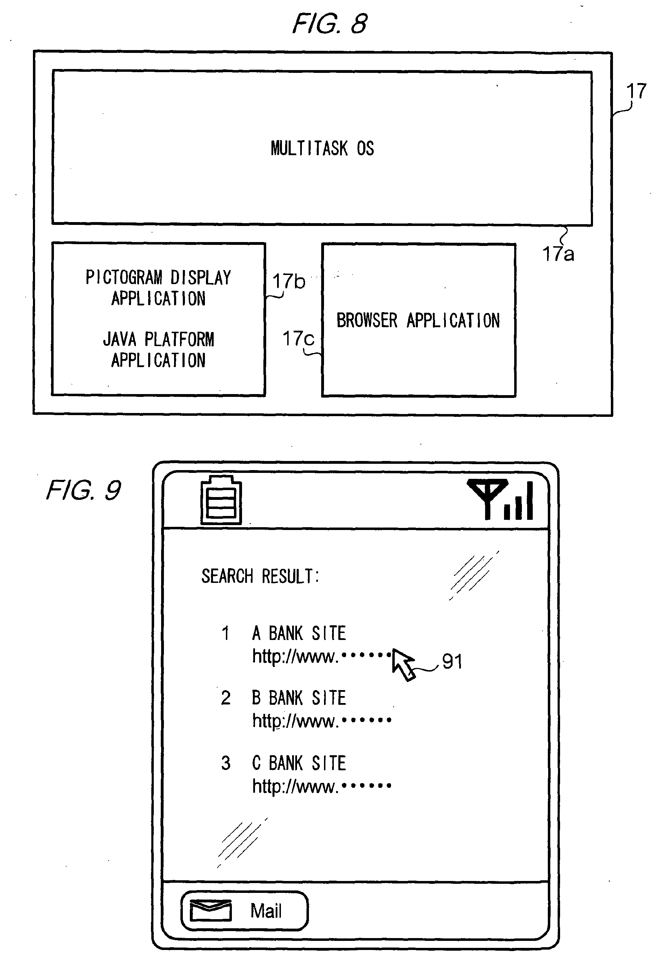

Now, an operation of the present embodiment will be described.

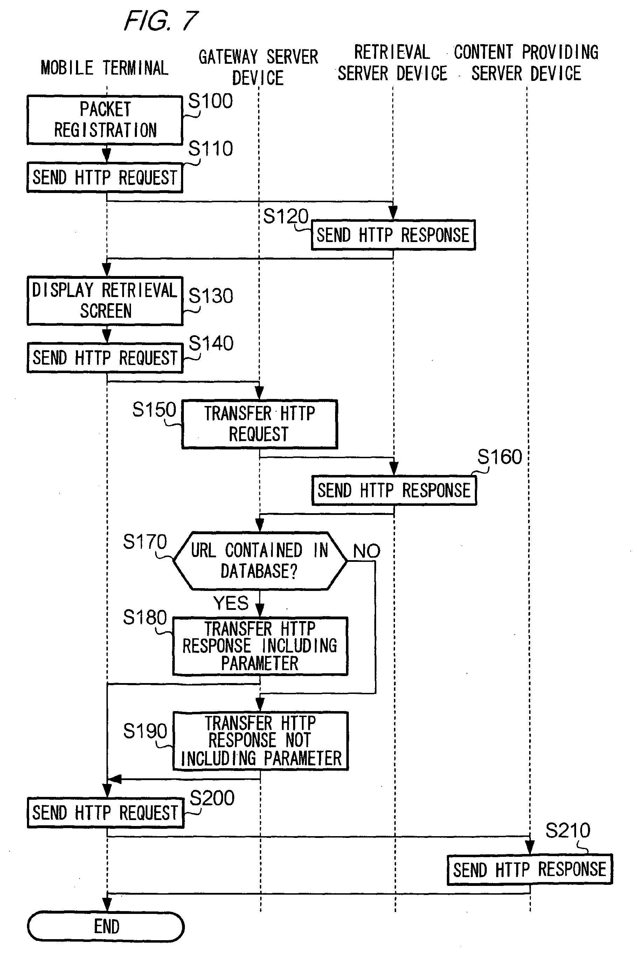

Fig. 7 is a flowchart showing an operation of the present embodiment. The operation is started when instruction input unit 13 of mobile terminal 10, which has downloaded pictogram display application 53a stored in gateway server device 50, is operated to start pictogram display application 53a and a browser application.
Mobile terminal 10 is loaded with multitasking OS 72, as described above; accordingly, a pseudo-parallel execution of plural tasks using a TSS is possible. Fig. 8 is a schematic diagram showing a memory space secured in RAM 17 when both pictogram display application 53a and a browser application are started. As shown in the drawing, in RAM 17, memory space 17a in which multitasking OS 72 is deployed, memory space 17b in which pictogram display application 53a and a Java platform application for supporting execution of pictogram display application 53a are deployed, and memory space 17c a browser application is deployed are separately secured.

In Fig. 7, control unit 11 of mobile terminal 10 carries out a packet registration in a packet subscriber processing device of mobile packet communication network 20 (S 1 00). A packet registration is a registration procedure to enable mobile terminal 10 to exchange packets with mobile packet communication network 20. After packet registration, mobile terminal 10 is able to exchange a variety of data with Internet communication network 40.

After a packet registration is made, control unit 11 of mobile terminal 10 awaits an input of a URL from instruction input unit 13. If instruction input unit 13 is operated by a user to input a URL indicating a storage location of search condition input screen data 33c, mobile terminal 10 sends an HTTP request addressed to the URL to mobile packet communication network 20 (S110). If retrieval server device 30 that has received the HTTP request via gateway server device 50 sends an HTTP response including search condition input screen data 33c (S120), mobile terminal 10 receives the HTTP response via gateway server device 50, interprets search condition input screen data 33c included in the HTTP response by performing a task in a browser application, and causes liquid crystal display unit 14 to display a search condition input screen (S130).

The search condition input screen has an input window for receiving entry of search conditions for retrieving content, and a button for ordering start of a search. If instruction input unit 13 is operated by a user to input search conditions that are conditions for retrieving content a user wishes to browse, in the input window, and to select the button to order start of a search, control unit 11 sends an HTTP request including search condition data representing the input search conditions to mobile packet communication network 20 (S 140). The HTTP request is sent to gateway server device 50 via mobile packet communication network 20.

Control unit 51 of gateway server device 50 that has received the HTTP request subjects the HTTP request to a protocol conversion, and thereafter transfers the HTTP request to Internet communication network 40 (S150). The transferred HTTP request is sent to the destination of retrieval server device 30 via Internet communication network 40.

Control unit 31 of retrieval server device 30 that has received the HTTP request extracts the search condition data included in the HTTP request. Control unit 31 identifies a record storing keyword information meeting the search condition represented by the search condition data among the records of retrieval database 33b stored in hard disk 33. Control unit 31 also extracts URLs stored in the field of "address" of the identified record. Control unit 31 embeds text of summaries of contents hyperlinked to the URLs in search result screen form data 33d to obtain search result screen data, and sends an HTTP response including the search result screen data, addressed to mobile terminal 10 that is the source of the HTTP request, to Internet communication network 40 (S160). The HTTP response is sent to gateway server device 50.

Control unit 51 of gateway server device 50 that has received the HTTP response subjects the HTTP response to a protocol conversion, and thereafter determines whether hyperlinked URLs of the search result screen data included in the HTTP response are stored in the field of "address" of certified CP database 53b (S170). Namely, at this step, it is determined whether hyperlinked HTML data indicated by URLs embedded in the search result screen data included in the HTTP response is data provided by certified content providers.

If at step 170 it is determined that the URLs are stored in certified CP database 53b (S170: YES), control unit 51 includes parameters indicating the URLs in a header of the HTTP response, and thereafter transfers the HTTP response to mobile packet communication network 20 (S180).

On the other hand, if at step 170 it is determined that the URLs are not stored in certified CP database 53b (S170: NO), control unit 51 transfers the HTTP response subjected to a protocol conversion to mobile packet communication network 20, without including a parameter in a header of the HTTP response (S190). The transferred HTTP response is sent to the destination of mobile terminal 10.

Control unit 11 of mobile terminal 10 that has received the HTTP response interprets the search result screen data included in the HTTP response by performing a task in a browser application, to obtain a search result screen, and causes liquid crystal display unit 14 to display the search result screen. Control unit 11 controls display of the search result screen on the basis of the parameters included in the search result screen data. Specifically, the operation is carried out in accordance with the following procedure.
The control unit determines wether element-specifying parameters are included in the header of the search result screen data, and if element-specifying parameters are included, extracts the element-specifying parameters from the header, and identifies elements specified by the extracted parameters.
The control unit also causes liquid crystal display unit 14 to display a screen in which text indicated by elements described as search result screen data is arranged in accordance with a layout of the elements. If element-specifying parameters have been extracted, the control unit, after causing liquid crystal display unit 14 to display the screen, monitors whether text of summaries displayed on the basis of elements indicated by the element-specifying parameters overlaps a pointer, and if the text and the pointer overlap each other, causes liquid crystal display unit 14 to display a pictogram. The content of the pictogram will be described later.

If a user moves a pointer to select hyperlinked text, control unit 11 sends an HTTP request addressed to a URL hyperlinked to the selected text (S200). Control unit 61 of content server device 60 that has received the HTTP request via gateway server device 50 sends an HTTP response including HTML data stored in its hard disk 63 as content data 63a, to mobile terminal 10 (S210).

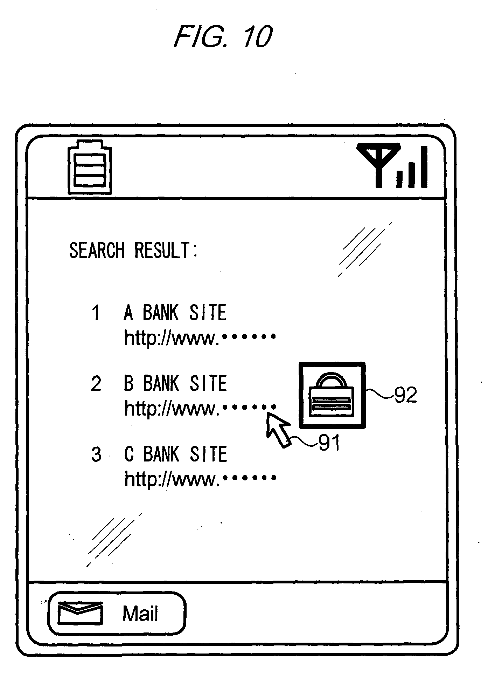

Figs. 9 and 10 are diagrams showing an example of a search result screen displayed on display control unit 14 of mobile terminal 10 that has received the HTTP response at step 190. As described above, pictogram display application 53a provides control unit 11 with a parameter extracting function and a pictogram display function. If the HTTP response is received, the search result screen data included in the HTTP response is interpreted, and resultant text is displayed over a display area of liquid crystal display unit 14. This is facilitated by a browser application.
In Fig. 9, among text displayed in a display area of liquid crystal display unit 14, pointer 91 has been moved to a position at which the pointer overlaps text "A Bank Site"; however, pictogram 92 representing a lock, indicating that the site is secure is not displayed near the pointer.

On the other hand, in Fig. 10, pointer 91 has been moved to a position at which the pointer overlaps text "B Bank Site", and pictogram 92 is displayed near the pointer. This is because control unit 11 using the parameter extracting function of pictogram display application 53a, in advance extracts a parameter indicating a URL of "B Bank Site" from the header of the HTTP response, and control unit 11 using the pictogram display function causes pictogram 92 to appear, when text "B Bank Site" hyperlinked to the URL indicated by the parameter overlaps a position to which pointer 91 has been moved.
If the text near which pictogram 92 appears is selected by a user, control unit 11 of mobile terminal 10, by performing a task in a browser application, sends an HTTP request to content providing server device 60 to which the text is hyperlinked; receives an HTTP response; interprets HTML data included in the received HTTP response; and causes liquid crystal display unit 14 to display a screen of the B bank site which is a site provided by a certified content provider.
Accordingly, a user is able to visually recognize that a hyperlinked site is not a site provided by a malicious content provider, by confirming whether pictogram 92 appears.

According to the present embodiment described above, gateway server device 50 operating under control of a carrier, when subjecting an HTTP response transferred from Internet communication network 40 to mobile packet communication network 20 via the device 50 to a protocol conversion, determines whether hyperlinked URLs included in HTML data of the HTTP response are stored in a database. If it is determined that the URLs are stored, gateway server device 50 includes parameters indicating the URLs in a header of the HTTP response, and thereafter transfers the HTTP response to mobile packet communication network 20.
Accordingly, if pictogram display application 53 has been downloaded from gateway server device 50 to mobile terminal 10 that can be a destination of an HTTP response including hyperlinked URLs, it is possible to cause pictogram 92 to appear, when text hyperlinked to a URL overlaps a position to which pointer 91 has been moved. Also, a carrier is able to lead a user not to unintentionally access malevolent content, without imposing a rule on retrieval providers, requiring them to embed a program in HTML data prepared by certified content providers.

### (Second Embodiment)

A second embodiment of the present invention will be described.
The meanings of terms "carrier", "user", "content provider", and "retrieval provider" of the present embodiment are the same as those of the first embodiment.
In the first embodiment, gateway server device 50 that has received an HTTP response addressed to mobile terminal 10 includes a parameter in a header of the HTTP response, and thereafter transfers the HTTP response.
In contrast, gateway server device 50 according to the present embodiment transfers an HTTP response addressed to mobile terminal 10, subjected to a protocol conversion, and if receiving an inquiry from mobile terminal 10 that has received the HTTP response, sends a parameter.

Hardware configurations of mobile terminal 10, retrieval server device 30, content providing server device 60, and gateway server device 50 of the present embodiment are the same as those of the first embodiment. Accordingly, explanation of them will be omitted.

Fig: 11 is a flowchart showing an operation of the present embodiment. The operation is started when instruction input unit 13 of mobile terminal 10, which has downloaded pictogram display application 53a stored in gateway server device 50, is operated to start pictogram display application 53a and a browser application.

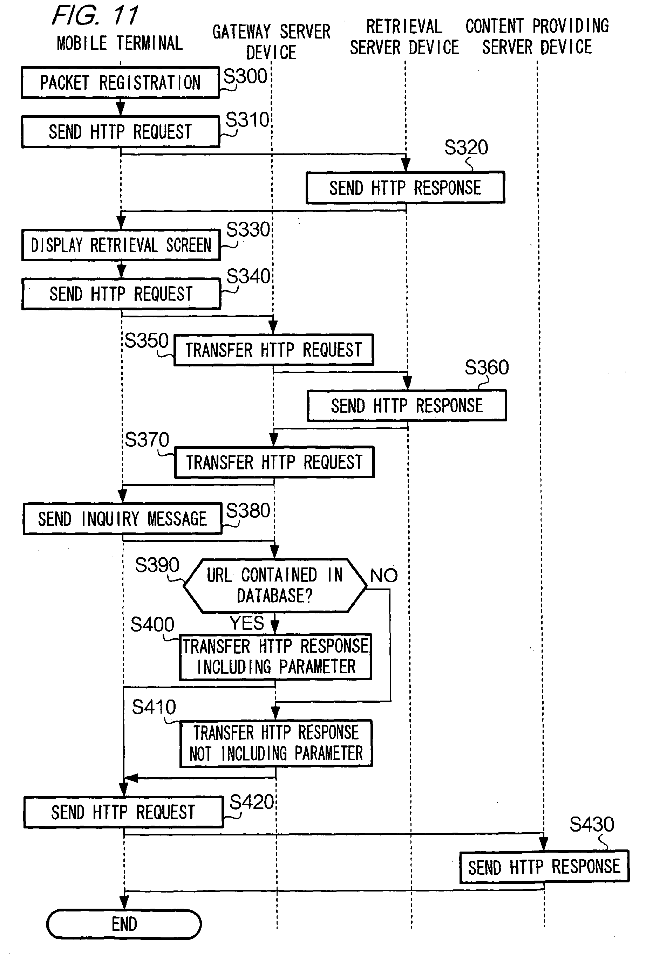

In Fig. 11, control unit 11 of mobile terminal 10 carries out a packet registration in a packet subscriber processing device of mobile packet communication network 20 (S300).
After a packet registration is made, control unit 11 of mobile terminal 10 awaits an input of a URL from instruction input unit 13. If instruction input unit 13 is operated by a user to input a URL indicating a storage location of search condition input screen data 33c, mobile terminal 10 sends an HTTP request addressed to the URL to mobile packet communication network 20 (S310). Retrieval server device 30 that has received the HTTP request via gateway server device 50 sends an HTTP response including search condition input screen data 33c (S320). Mobile terminal 10 receives the HTTP response via gateway server device 50, interprets search condition input screen data 33c included in the HTTP response by performing a task in a browser application, and causes liquid crystal display unit 14 to display a search condition input screen (S330).

The search condition input screen has an input window for receiving entry of search conditions for retrieving content, and a button for ordering start of a search. If instruction input unit 13 is operated by a user to input search conditions that are conditions for retrieving content a user wishes to browse, in the input window, and to select the button to order start of a search, control unit 11 sends an HTTP request including search condition data representing the input search conditions, addressed to the URL of the storage location of the search condition input screen data, to mobile packet communication network 20 (S340). The HTTP request is sent to gateway server device 50 via mobile packet communication network 20.

Control unit 51 of gateway server device 50 that has received the HTTP request subjects the HTTP request to a protocol conversion, and thereafter transfers the HTTP request to Internet communication network 40 (S350). The transferred HTTP request is sent to the destination of retrieval server device 30 via Internet communication network 40.
Control unit 31 of retrieval server device 30 that has received the HTTP request extracts the search condition data included in the HTTP request. Control unit 31 identifies a record storing keyword information meeting the search condition represented by the search condition data among the records of retrieval database 33b stored in hard disk 33. Control unit 31 also extracts URLs stored in the field of "address" of the identified record. Control unit 31 embeds text hyperlinked to the URLs in search result screen form data 33d to obtain search result screen data, and sends an HTTP response including the search result screen data, addressed to mobile terminal 10 that is the source of the HTTP request, to Internet communication network 40 (S360). The HTTP response is sent to gateway server device 50 via Internet communication network 40.

Control unit 51 of gateway server device 50 that has received the HTTP response subjects the HTTP response to a protocol conversion, and thereafter transfers the HTTP response to mobile packet communication network 20 (S370). The transferred HTTP response is sent to the destination of mobile terminal 10 via mobile packet communication network 20.
Control unit 11 of mobile terminal 10 that has received the HTTP response extracts hyperlinked URLs embedded in the search result screen data of the HTTP response. Control unit 11 sends an inquiry message including the URLs, addressed to gateway server device 50, to mobile packet communication network 20 (S380). The inquiry message is sent to the destination of gateway server device 50.

Control unit 51 of gateway server device 50 that has received the inquiry message determines whether the URLs included in the received message are stored in the field of "address" of certified CP database 53b (S390).
If at step 390 it is determined that the URLs are stored in certified CP database 53b (S390: YES), control unit 51 sends a response message including parameters indicating the URLs to mobile packet communication network 20 (S400).
On the other hand, if at step 390 it is determined that the URLs are not stored in certified CP database 53b (S390: NO), control unit 51 transfers a response message not including a parameter to mobile packet communication network 20 (S410).

The response message is sent to the destination of mobile terminal 10. Control unit 11 of mobile terminal 10 that has received the response message, if the message includes parameters, carries out display control of a pictogram, using the parameters. Namely, control unit 11 causes liquid crystal display unit 14 to display the text embedded in the search result screen data in a display area, as shown in Figs. 9 and 10, and if pointer 91 is moved to a position at which the pointer overlaps text hyperlinked to a URL indicated by one of the parameters, causes pictogram 92 indicating that a hyperlinked site is secure to appear near the pointer.
If a user selects text included in the content displayed on liquid crystal display unit 14, control unit 11 sends an HTTP request addressed to a URL hyperlinked to the selected text (S420). Control unit 61 of content server device 60 that has received the HTTP request sends an HTTP response including HTML data stored in its hard disk 63 as content data 63a, to mobile terminal 10 (S430).
As in the embodiment described above, in a case where communication of HTML data and communication of parameters are carried out in two sessions, it is possible to lead a user not to unintentionally access malevolent content, as in the case of the first embodiment.

### (Other Embodiments)

Embodiments of the present invention can be modified in various ways.
In the above embodiments, pictogram display application 53a is stored in hard disk 53 of gateway server device 50, and in response to a request from mobile terminal 10, downloaded from gateway server device 50. However, Internet communication network 40 may be provided with a server device operating under control of a carrier, which stores pictogram display application 53a, and pictogram display application 53a may be downloaded to mobile terminal 10 from the server device.

Further, pictogram display application 53a does not have to be a Java application running in a Java execution environment. Pictogram display application 53a may be pre-stored in ROM 16 of mobile terminal 10 as a native application.

In the above embodiments, content data including search condition input screen data 33c and search result screen form data 33d are described in HTML format. However, content data may be described in other markup languages, such as XML (Extensible Markup Language), as long as the content data can be displayed on liquid crystal display unit 14 of mobile terminal 10.

In the first embodiment, gateway server device 50 determines with regard to search result screen data included in an HTTP response transferred from Internet communication network 40 to mobile packet communication network 20 via the device 50, whether hyperlinked URLs of text included in the search result screen data are stored in certified CP database 53b. However, the data may be other HTML data, instead of search result screen data, as long as the HTML data includes plural text hyperlinked to a URL.

In the above embodiments, gateway server device 50 includes parameters in a header of an HTTP response. However, parameters may be transferred as a part of entity data of an HTTP response. It does not matter how parameters are included in an HTTP response, as long as the parameters can be extracted from the HTTP response in mobile terminal 10.

In the first embodiment, each record of certified CP database 53b has two fields of "address" and "parameter". However, only URLs of HTML data certified by a carrier may be stored in certified CP database 53b. In this modification, control unit 51 of gateway server device 50 that has determined that a URL is stored in certified CP database 53b at step 170, includes the URL in a header of an HTTP response, and thereafter transfers the HTTP response to mobile packet communication network 20. Mobile terminal 10 is provided by pictogram display application 53 downloaded to mobile terminal 10, with an address extracting function of extracting an address from a header of an HTTP response, and a pictogram display function of, if a display position at which text hyperlinked to the extracted address is displayed and a position to which a pointer has been moved overlap each other, causing a pictogram showing that a linked site is secure to appear.
As in the present modification, even if addresses are communicated between gateway server device 50 and mobile terminal 10, instead of parameters, it is possible to achieve the same result as that of the above embodiments.

In the above embodiments, mobile terminal 10, which is a cell-phone capable of accessing Internet communication network 40 via mobile packet communication network 20, is mounted with pictogram display application 57. However, even in a case where the same type of an application is mounted in a personal computer capable of directly accessing Internet communication network 40, it is possible to attain the same effect.

In the above embodiments, retrieval server device 30 retrieves content using search condition data included in an HTTP request received from mobile terminal 10, embeds text of a summary of the retrieved content and a URL of the content in search result screen form data 33d to obtain search result screen data, and sends an HTTP response including the search result screen data to mobile terminal 10. However, retrieval server device 30 may embed an image showing a summary of content, instead of text of a summary of content, and a URL in search result screen form data 33d to obtain search result screen data.
In the above embodiments, the programs executed by control unit 11 of mobile terminal 10 and control unit 51 of gateway server device 50 may be provided via a computer-readable recording medium such as a magnetic recording medium (a magnetic tape or a magnetic disk (HDD (Hard Disk Drive) or FD (Flexible Disk))), an optical recording medium (an optical disk (a CD (Compact Disk) or a DVD (Digital Versatile Disk))), an optical magnetic recording medium, or a semiconductor memory (a flash ROM). Also, the programs may be provided to a mobile terminal or a gateway server device via a network such as the Internet.

## Claims

1. A content distribution management device comprising:
a storage means storing one or more addresses;
a receiving means for receiving content data including hyperlinked text or hyperlinked image;
a determining means for determining whether an address to which the text or the image included in the received content data is hyperlinked, is an address stored in the storage means; and
a sending means for, if the determining means determines that the address to which the text or the image included in the content data is hyperlinked, is an address stored in the storage means, sending a parameter determining a method in which content is displayed in a communication terminal which is a destination of the content data, and the content data to the communication terminal.

2. The content distribution management device according to Claim 1, further comprising:
a means for receiving a request including an address in an Internet communication network from a communication network; and
a means for transferring the received request to the Internet communication network.

3. A content distribution management device comprising:
a storage means storing one or more addresses;
a receiving means for receiving from a communication terminal that has received content data, an address to which text or an image included in the content data is hyperlinked;
a determining means for determining whether the received address is an address stored in the storage means; and
a sending means for, if the determining means determines that the address is an address stored in the storage means, sending a parameter determining a method in which content is displayed in the communication terminal which is a destination of the content data, to the communication terminal.

4. The content distribution management device according to any one of Claims 1 to 3, wherein the content data is display control data describing an element representing the text or the image to be displayed on a display device of the communication terminal, and a layout of the element, in a predetermined markup language.

5. The content distribution management device according to Claim 4, wherein:
the parameter is a parameter indicating an element representing text or image; and
if a pointer operated using an operation overlaps the text or the image, after the text or the image is displayed on the display device of the communication terminal, a predetermined pictogram appears.

6. The content distribution management device according to Claim 4, wherein
the parameter is a parameter indicating an element representing text or image; and
if the text or the image is highlighted by an operation using an operation, after the text or the image is displayed on the display device of the communication terminal, a predetermined pictogram appears.

7. The content distribution management device according to Claim 5 or 6, wherein the element representing the text or the image is an element hyperlinked to a certified address.

8. A communication terminal comprising:
a display means for displaying information;
an operation means:
a receiving means for receiving content data and a parameter indicating an element, the content data being display control data describing an element of hyperlinked text or a hyperlinked image and a layout of the element in a predetermined markup language;
a first display control means for causing the display means to display the text or the image represented by the element of the received content data, in accordance with the layout; and
a second display control means for, if text or an image represented by the element indicated by the received parameter, among the text or the image displayed on the display means, overlaps a pointer operated using the operation means, causing a predetermined pictogram to appear.

9. A communication terminal comprising:
a display means for displaying information;
an operation means:
a receiving means for receiving content data and a parameter indicating an element, the content data being display control data describing an element of hyperlinked text or a hyperlinked image and a layout of the element in a predetermined markup language;
a first display control means for causing the display means to display the text or the image represented by the element of the received content data, in accordance with the layout; and
a second display control means for, if text or an image represented by the element indicated by the received parameter, among the text or the image displayed on the display means, is highlighted by an operation using the operation means, causing a predetermined pictogram to appear.

10. A program for causing a computer device comprising:
a display means for displaying information;
an operation means; and
a communication means for communicating information, to execute:
a step of receiving content data and a parameter indicating an element via the communication means, the content data being display control data describing an element of hyperlinked text or a hyperlinked image and a layout of the element in a predetermined markup language;
a step of causing the display means to display the text or the image represented by the element of the received content data, in accordance with the layout; and
a step of, if text or an image represented by the element indicated by the received parameter, among the text or the image displayed on the display means, overlaps a pointer operated using the operation means, causing a predetermined pictogram to appear.

11. A program for causing a computer device comprising:
a display means for displaying information;
an operation means; and
a communication means for communicating information, to execute:
a step of receiving content data and a parameter indicating an element via the communication means, the content data being display control data describing an element of hyperlinked text or a hyperlinked image and a layout of the element in a predetermined markup language;
a step of causing the display means to display the text or the image represented by the element of the received content data, in accordance with the layout; and
a step of, if text or an image represented by the element indicated by the received parameter, among the text or the image displayed on the display means, is highlighted by an operation using the operation means, causing a predetermined pictogram to appear.

12. A content distribution system comprising:
a content distribution management device comprising:
a storage means storing one or more addresses;
a receiving means for receiving content data including hyperlinked text or hyperlinked image;
a determining means for determining whether an address to which the text or the image included in the received content data is hyperlinked, is an address stored in the storage means; and
a sending means for, if the determining means determines that the address to which the text or the image included in the content data is hyperlinked, is an address stored in the storage means, sending a parameter determining a method in which content is displayed in a communication terminal which is a destination of the content data, and the content data to the communication terminal; and
a communication terminal comprising:
a receiving means for receiving the parameter and the content data from the content distribution management device; and
a content display control means for displaying the received content data, and controlling how the content data is displayed, on the basis of the received parameter.
